(19) Europäisches Patentamt
European Patent Office
Office européen des brevets

(11) **EP 4 624 907 A1**

(12) **EUROPEAN PATENT APPLICATION**

(43) Date of publication:
**01.10.2025 Bulletin 2025/40**

(21) Application number: **24167183.3**

(22) Date of filing: **28.03.2024**

(51) International Patent Classification (IPC):
**G01N 21/88** (2006.01)        **G01N 21/95** (2006.01)

(52) Cooperative Patent Classification (CPC):
**G01N 21/9501; G01N 21/8851;** G01N 21/8806;
G01N 2021/8841

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Nexperia B.V.**
**6534 AB Nijmegen (NL)**

(72) Inventors:
• **Yeung, Chi Shing**
**Hong Kong (HK)**
• **Leung, Chi To**
**Hong Kong (HK)**

(74) Representative: **Pjanovic, Ilija**
**Nexperia B.V.**
**Legal & IP**
**Jonkerbosplein 52**
**6534 AB Nijmegen (NL)**

(54) **AN OPTICAL INSPECTION DEVICE ARRANGED FOR OPTICALLY INSPECTING A SEMICONDUCTOR DEVICE, AS WELL AS A CORRESPONDING METHOD**

(57)     An Optical Inspection device arranged for optically inspecting a semiconductor device, said Optical Inspection device comprising a camera, a lens mounted to said camera and configured for providing multiple optical paths towards said semiconductor device, a first of said multiple optical paths arranged for providing a first view of said semiconductor device, and a second of said multiple optical paths arranged for providing a second view, different to said first view, of said semiconductor device, a focus compensation prism provided in said first of said multiple optical paths and adapted for compensating for different lengths of said multiple optical paths, a mirror provided in said first of said multiple optical paths for redirecting said first of said multiple optical paths to said semiconductor device to thereby obtain said first view of said semiconductor device.

fig. 3

**Description**

<u>Technical field</u>

The present disclosure generally relates to the field of optical inspection and, more specifically, to an optical inspection device for optically inspection a semiconductor device.

<u>Background</u>

Side view inspection plays an important role in the functionality of Automatic Optical Inspection, AOI, machines, particularly in the context of semiconductor defect detection. Unlike top view or surface inspections, side view inspection offers a distinct perspective and viewing angle, which proves invaluable for tasks such as wire bonding and post-molding defect detection.

By incorporating side view inspection capabilities, AOI machines can significantly enhance their inspection capabilities, detecting issues like wire sweep, wire looping in wire bonding, as well as voids and cracks in post-moulding components.

Traditionally, achieving multiple side views necessitates the utilization of a multiple camera setup. This approach involves positioning several cameras at various angles to capture side views of the components under inspection. While effective, it comes with substantial costs and spatial requirements. The need for multiple cameras and considerable space to accommodate them adds to the complexity and expense of the system.

To address these challenges, there is a growing interest in developing cost-effective solutions that require minimal space while still enabling the capture of non-line-of-sight features from a top view perspective. Such innovations aim to streamline the inspection process, enhance image analysis efficiency, and improve the traceability of inspected targets. By consolidating multiple perspectives within a single image, these advancements offer a more streamlined and efficient approach to Automated Optical Inspection.

By leveraging innovative technologies and methodologies, researchers and engineers are exploring novel approaches to side view inspection that minimize costs and spatial requirements while maximizing efficiency and effectiveness. These advancements hold the promise of revolutionizing semiconductor defect detection, enabling more comprehensive and accurate inspections while reducing the complexity and expense associated with traditional multiple camera setups.

In summary, side view inspection is indispensable for AOI machines in semiconductor defect detection, offering unique insights and perspectives that complement traditional top view inspections. While conventional methods rely on multiple camera setups, the pursuit of cost-effective solutions aims to streamline the process and improve overall efficiency. Through ongoing innovation and development, the future of side view inspection promises to deliver enhanced capabilities and performance, driving advancements in semiconductor manufacturing and quality assurance.

<u>Summary</u>

It would be advantageous to achieve an Optical Inspection device that is able to provide a side view as well as a top view of a semiconductor device utilizing a single camera. It would further be advantageous to achieve a corresponding method.

In a first aspect of the present disclosure, there is provided an Optical Inspection device arranged for optically inspecting a semiconductor device, said Optical Inspection device comprising:

- a camera;
- a lens mounted to said camera and configured for providing multiple optical paths towards said semiconductor device, a first of said multiple optical paths arranged for providing a first view of said semiconductor device, and a second of said multiple optical paths arranged for providing a second view, different to said first view, of said semiconductor device;
- a focus compensation prism provided in said first of said multiple optical paths and adapted for compensating for different lengths of said multiple optical paths;
- a mirror provided in said first of said multiple optical paths for redirecting said first of said multiple optical paths to said semiconductor device to thereby obtain said first view of said semiconductor device.

The inventors have found that it may be beneficial to make use of a mirror to create different view angles of the semiconductor device using a single camera. A mirror can be used for, for example, redirecting the optical path between a top view and a side view of the semiconductor device.

It was found that using mirrors may result in different path lengths of the optical paths. This may cause focus issues. In order to compensate for the different path lengths, a focus compensation prism is provided in one of the multiple optical paths. The focus compensation prism is arranged for compensating for different lengths of the multiple optical paths.

The path difference is essentially the variance in the distance travelled by light rays as they pass through different mediums or paths within an optical system. This difference arises due to the fact that two difference angles, i.e. views, of the semiconductor device are obtained.

The prism may have multiple "tuning" parameters to adjust for the difference in pathway length.

First, the prism thickness. The thickness of the prism affects how much the light rays are deviated or bent as they pass through it. A thicker prism will typically cause a greater deviation in the light's path, leading to a larger path difference.

Second, the prism height. The height of the prism refers to its physical dimension in the direction perpendicular to the light path. This dimension can also influence how much the light rays are bent or refracted, thereby affecting the path difference.

Third, the refractive Index of the Prism. The refractive index of a material describes how much the speed of light changes when it passes through that material. A higher refractive index means that light will bend more as it enters and exits the prism, which can lead to a larger path difference.

The Optical Inspection device may be suitable for optically inspecting a semiconductor device and, especially, non-singulated semiconductor devices.

Non-singulated semiconductor devices refer to semiconductor components that have not been separated or individualized from a larger wafer or substrate. In semiconductor manufacturing, multiple semiconductor devices are often fabricated on a single wafer through processes such as lithography, etching, and deposition. After fabrication, the wafer is typically diced into individual chips or devices, a process known as singulation.

Non-singulated semiconductor devices, therefore, are those that remain connected to each other on the wafer or substrate before the singulation process. They may still undergo further processing or testing before being singulated into individual devices for final packaging and integration into electronic systems.

In an example, the application on non-singulated devices is on the backend assembly instead of an a front end wafer side. The optical inspection device may be used in processes like die bond, wire bond, and molding. In these stages, the chips are still present on a carrier, which is often called lead frame without singulation. The optical inspection device may be placed above the continuous running lead frame to perform inspection, with side views.

In an example, the focus compensation prism comprises said mirror. The mirror and the focus compensation prism may thus be one integrated whole.

For example, a coating may be provided on the focus compensation prism, wherein the coating forms the mirror.

In a further example, the focus compensation prism is provided in said first of said multiple optical paths in such a way that said first of said multiple optical paths falls perpendicular to a side of said focus compensation prism.

The optical rays in the first optical path may fall perpendicular onto a particular side of the focus compensation prism.

In another example, the focus compensation prism is provided in said first of said multiple optical paths in such a way that said first of said multiple optical paths falls on a slanted side of said focus compensation prism.

Such a design is to deal with the reflection problem encountered when using coaxial light on a flat prism top surface. Part of the light reflected from the prism top surface results in over exposure on the side view, thus affecting the image quality. By introducing a slanted top surface, it minimizes direct reflection of light. Therefore, coaxial light could be applied in the imaging system.

In a further example, the camera and lens are oriented in such a way that said first view is a side view of said semiconductor device and said second view is a top view of said semiconductor device.

In yet another example, the focus compensation prisms are provided in each of said multiple optical paths except for one of said multiple optical paths.

In a second aspect of the present disclosure, there is provided a method of operating an Optical Inspection device in accordance with any of the previous examples, wherein said method comprises the steps of:

- providing said focus compensation prism in said first of said multiple optical paths for compensating for different lengths of said multiple optical paths.

It is noted that the advantages as explained with respect to the first aspect of the present disclosure, being the optical inspection device, are also applicable to the second aspect of the present disclosure, being the method of operating such an optical inspection device.

In an example, the focus compensation prism comprises said mirror.

The mirror may be implemented as a coating provided on the focus compensation prism.

In an example, the step of providing comprises:

- providing said focus compensation prism in said first of said multiple optical paths in such a way that said first of said multiple optical paths falls perpendicular to a side of said focus compensation prism.

In a further example, the step of providing comprises:

- providing said focus compensation prism in said first of said multiple optical paths in such a way that said first of said multiple optical paths falls on a slanted side of said focus compensation prism.

In yet another example, the camera and lens are oriented in such a way that said first view is a side view of said semiconductor device and said second view is a top view of said semiconductor device.

In an example, the step of providing further comprises:

- providing focus compensation prisms in each of said multiple optical paths except for one of said multiple optical paths.

In a third aspect of the present disclosure, there is provided an Optical Inspection system comprising an Optical Inspection device in accordance with any of the previous examples as well as said semiconductor device.

In the appended figures, similar components and/or features may have the same reference label. Further, various components of the same type may be distinguished by following the reference label by a dash and a second label that distinguishes among the similar components. If only the first reference label is used in the specification, the description is applicable to any one of the similar components having the same first reference label irrespective of the second reference label.

The above and other aspects of the disclosure will be apparent from and elucidated with reference to the examples described hereinafter.

Brief description of the figures

Fig. 1 shows an Optical Inspection device in accordance with the present disclosure;
Fig. 2 shows a focus compensation prism having a mirror coating, in accordance with the present disclosure;
Fig. 3 discloses a further Optical Inspection device in accordance with the present disclosure;
Fig. 4 discloses an example of a focus compensation prism in accordance with the present disclosure;
Fig. 5 discloses an example of different optical path lengths, and the compensation therefor.

Detailed description

It is noted that in the description of the figures, same reference numerals refer to the same of similar components performing a same of essentially similar function.

A more detailed description is made with reference to particular examples, some of which are illustrated in the appended drawings, such that the features of the present disclosure may be understood in more detail. It is noted that the drawings only illustrate typical examples and are therefore not to be considered to limit the scope of the subject matter of the claims. The drawings are incorporated for facilitating an understanding of the disclosure and are thus not necessarily drawn to scale. Advantages of the subject matter as claimed will become apparent to those skilled in the art upon reading the description in conjunction with the accompanying drawings.

The ensuing description above provides preferred exemplary embodiment(s) only, and is not intended to limit the scope, applicability, or configuration of the disclosure. Rather, the ensuing description of the preferred exemplary embodiment(s) will provide those skilled in the art with an enabling description for implementing a preferred exemplary embodiment of the disclosure, it being understood that various changes may be made in the function and arrangement of elements, including combinations of features from different embodiments, without departing from the scope of the disclosure.

Unless the context clearly requires otherwise, throughout the description and the claims, the words "comprise," "comprising," and the like are to be construed in an inclusive sense, as opposed to an exclusive or exhaustive sense; that is to say, in the sense of "including, but not limited to." As used herein, the terms "connected," "coupled," or any variant thereof means any connection or coupling, either direct or indirect, between two or more elements; the coupling or connection between the elements can be physical, logical, electromagnetic, or a combination thereof. Additionally, the words "herein," "above," "below," and words of similar import, when used in this application, refer to this application as a whole and not to any particular portions of this application. Where the context permits, words in the Detailed Description using the singular or plural number may also include the plural or singular number respectively. The word "or" in reference to a list of two or more items, covers all the following interpretations of the word: any of the items in the list, all of the items in the list, and any combination of the items in the list.

These and other changes can be made to the technology considering the following detailed description. While the description describes certain examples of the technology, and describes the best mode contemplated, no matter how detailed the description appears, the technology can be practiced in many ways. Details of the system may vary considerably in its specific implementation, while still being encompassed by the technology disclosed herein. As noted above, particular terminology used when describing certain features or aspects of the technology should not be taken to imply that the terminology is being redefined herein to be restricted to any specific characteristics, features, or aspects of the technology with which that terminology is associated. In general, the terms used in the following claims should not be construed to limit the technology to the specific examples disclosed in the specification, unless the Detailed Description section explicitly defines such terms. Accordingly, the actual scope of the technology encompasses not only the disclosed examples, but also all equivalent ways of practicing or implementing the technology under the claims.

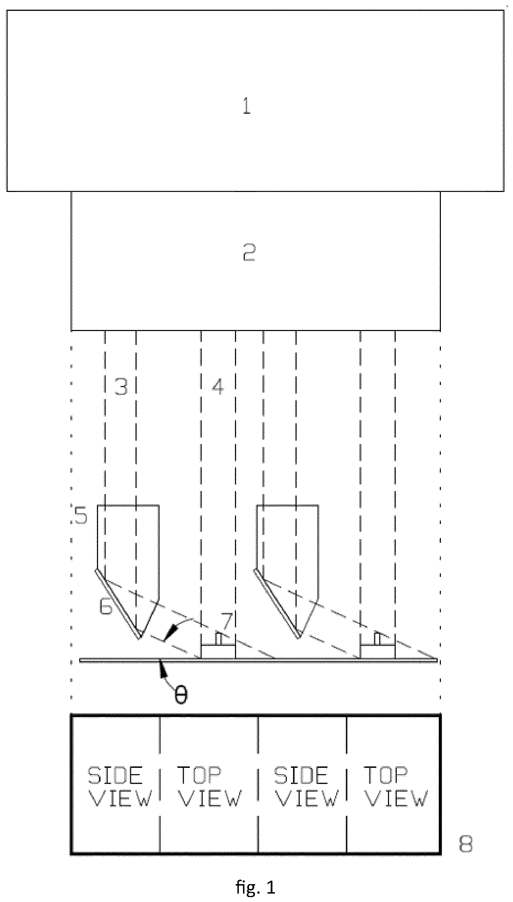

The complete setup for achieving multiple views using a single camera is demonstrated in Figure 1. This comprehensive imaging configuration consists of a camera (1) and lens (2), with a target object (7), being the semiconductor device, positioned beneath the camera.

Here, a top view is obtained through the optical path (4) designated for the top view. To capture the side view perspective of the object at an angle, θ, a focus compensation prism (5) with mirror coating (6) on the angled surface is integrated into the imaging system.

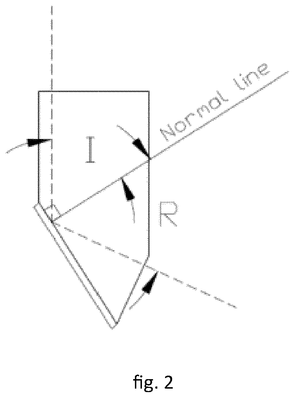

The presence of the focus compensation prism and mirror coating redirects the optical path when it is reflected on the mirror. The angle of reflection (R) theoretically mirrors the angle of incidence (I) relative to the normal line on the mirror surface, as illustrated in Figure 2.

The optical path for the side view (3) demonstrates how side views are formed. Since the optical paths for the side view (3) and top view (4) differ, the prism compensates for this discrepancy. The extent of compensation hinges on the path difference, which is regulated by the prism's thickness and height, as well as the refractive index of the prism.

The resulting image captured beneath the camera is depicted in diagram (8). This showcases how a single camera can provide multiple side views by employing a mirror with focus compensation prism, ensuring high-quality imaging across various perspectives. Compared to using a dedicated camera for acquiring side views of the target, the described approach accomplishes the same task with just one camera. This innovation facilitates space and cost reduction in AOI machines, thereby enhancing the overall machine UPH (units per hour).

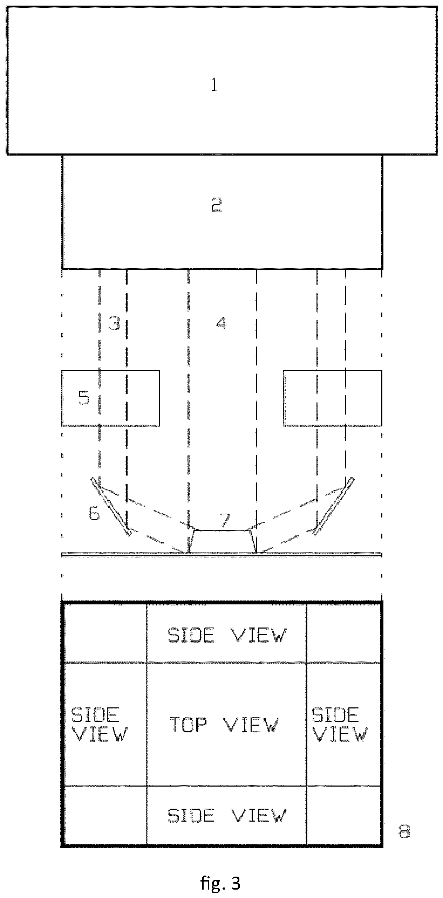

Figure 3 illustrates an alternative setup for achieving multiple side views with a single camera. Instead of incorporating a mirror coating on the focus compensation mirror, this alternative design separates the two components, providing greater flexibility in the placement of the focus compensation prism.

By integrating multiple prisms and mirrors, four side views can be obtained with a single camera, as shown in the camera view (8). Depending on the specific target for inspection, the mirrors on different side views can vary in length, allowing for flexible design to accommodate diverse inspection needs.

In contrast to the multiple camera approach, which necessitates the use of multiple cameras, each capturing different side views through meticulous focus adjustment, this setup is more time-consuming. Furthermore, it is less efficient for software analysis as side view information is stored in separate images, necessitating additional effort to correlate the data. In contrast, consolidating all views into a single image streamlines software analysis, facilitating defect identification on the target object.

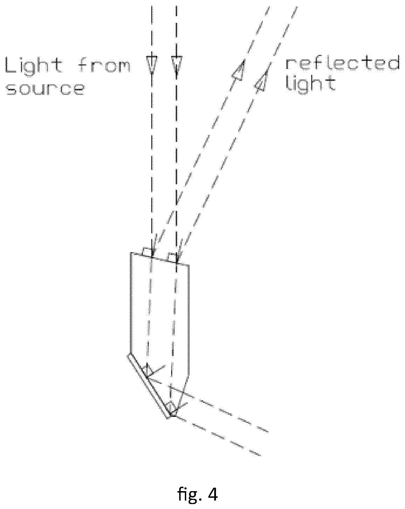

In Figure 4, a novel design featuring a focus compensation prism with a slanted top surface is introduced to address reflection issues encountered when using coaxial light on a flat prism top surface. Reflection from the prism top surface can result in overexposure on the side view, thereby affecting image quality. By incorporating a slanted top surface, direct reflection of light is minimized, allowing for the application of coaxial light in the imaging system.

Overall, these two distinct design approaches demonstrate the versatility of the invention, enabling its application to various targets with different view angles and fields of view, depending on inspection requirements. This versatility allows for customized designs tailored to different targets. In the context of Optical Inspection device design for semiconductors, package-specific designs can be implemented, enabling the machine to seamlessly transition between inspecting different packages. Furthermore, the present disclosure enhances Optical Inspection rates, optimizing units per hour (UPH). By designing fixtures to mount the prism with focus compensation, multiple units of the target can be inspected within the camera's field of view, further optimizing the UPH.

Expanding upon the utility and significance of the present disclosure, it may be of importance to delve deeper into the technical aspects and implications. The incorporation of a focus compensation prism and mirror coating into the imaging system revolutionizes the capabilities of Optical Inspection devices, particularly in semiconductor defect detection. By providing multiple views with a single camera, these advancements enhance the comprehensiveness and accuracy of inspections, allowing for the detection of intricate defects such as wire sweep, wire looping in wire bonding, voids, and cracks in post-molding components.

Furthermore, the ability to achieve multiple side views without the need for multiple cameras significantly reduces the cost and space requirements of Optical Inspection devices, making them more accessible and practical for a wide range of applications.

In addition to cost and space savings, the present disclosure also offers advantages in terms of efficiency and ease of use. By consolidating multiple perspectives into a single image, software analysis is streamlined, enabling more efficient defect identification and analysis. This not only reduces the time and resources required for inspection but also enhances overall productivity and throughput.

Moreover, the flexibility afforded by alternative setups, such as the one depicted in Figure 3, further enhances the adaptability and versatility of Optical Inspection systems, allowing for tailored solutions to meet specific inspection requirements.

Furthermore, the introduction of novel designs, such as the focus compensation prism with a slanted top surface shown in Figure 4, highlights the ongoing pursuit of innovation and optimization in Optical Inspection technology. By addressing issues such as reflection and overexposure, these designs improve the quality and reliability of inspections, ensuring more accurate and consistent results. This continual refinement and enhancement of Optical Inspection devices underscore their crucial role in semiconductor manufacturing and quality assurance processes, driving advancements and improvements in the industry as a whole.

The advancements in single-camera multiple view setups represent a significant milestone in the evolution of Optical Inspection technology. By enabling comprehensive and efficient inspections with reduced cost and space requirements, these innovations pave the way for enhanced quality assurance and productivity in semiconductor manufacturing and beyond. As the field continues to progress, it is essential to embrace and leverage these advancements to drive further improvements and innovations in Optical Inspection devices, ultimately advancing the capabilities and performance of semiconductor manufacturing processes.

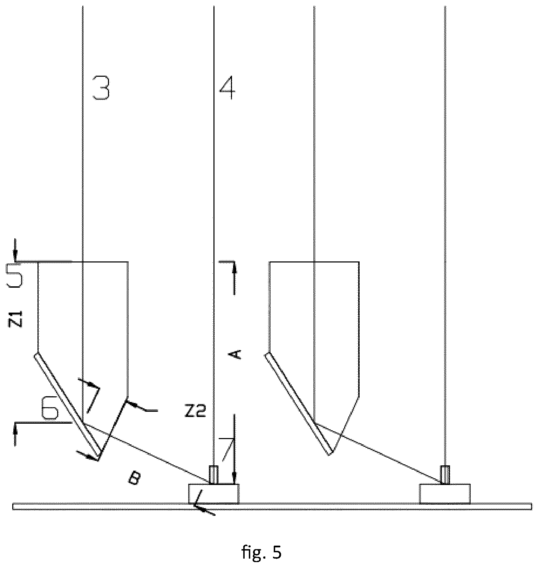

Fig. 5 discloses an example of different optical path lengths, and the compensation therefor. An explanation is provided how the focus compensation prism is able to compensate for deviating optical path lengths.

First, the refractive index of the focus compensation prism is "n". The refractive index "n" of a material is defined as the ratio of the speed of light in vacuum to the speed of light in the material. The optical path length through the focus compensation prism may be defined as "d". The same length optical path through air may be defined as "d". Further, as shown in figure 5, the first path is longer due to the addition of the path indicated with "B" and "Z2". So, the second path length may be indicated with "A", the first path length may be indicated with "Z1" + "Z2" + "B".

To have equal optical paths, the following equations may be defined:

$(Z1 + Z2)/n + B = A$. The left side of the equation is related to the path length in the first path. The second side of the equation is related to the path length in the second path.

The dimensions of the prism may then be calculated by:

$$\text{The dimensions of the prism may then be calculated by:}$$

$$Z1 + Z2 = (A-B)*N.$$

Other variations to the disclosed embodiments can be understood and effected by those skilled in the art in practicing the claimed invention, from a study of the drawings, the disclosure, and the appended claims. The provided figures and descriptions of the embodiments of the invention are illustrative and explanatory to the heart of the invention and should not be seen as limiting the invention thereto. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope thereof.

**Claims**

1. An Optical Inspection device arranged for optically inspecting a semiconductor device, said Optical Inspection device comprising:

   - a camera;
   - a lens mounted to said camera and configured for providing multiple optical paths towards said semiconductor device, a first of said multiple optical paths arranged for providing a first view of said semiconductor device, and a second of said multiple optical paths arranged for providing a second view, different to said first view, of said semiconductor device;
   - a focus compensation prism provided in said first of said multiple optical paths and adapted for compensating for different lengths of said multiple optical paths;

- a mirror provided in said first of said multiple optical paths for redirecting said first of said multiple optical paths to said semiconductor device to thereby obtain said first view of said semiconductor device.

2. An Optical Inspection device in accordance with claim 1, wherein said focus compensation prism comprises said mirror.

3. An Optical Inspection device in accordance with claim 2, wherein said mirror is coated on said focus compensation prism.

4. An Optical Inspection device in accordance with any of the previous claims, wherein said focus compensation prism is provided in said first of said multiple optical paths in such a way that said first of said multiple optical paths falls perpendicular to a side of said focus compensation prism.

5. An Optical Inspection device in accordance with any of the claims 1-3, wherein said focus compensation prism is provided in said first of said multiple optical paths in such a way that said first of said multiple optical paths falls on a slanted side of said focus compensation prism.

6. An Optical Inspection device in accordance with any of the previous claims, wherein said camera and lens are oriented in such a way that said first view is a side view of said semiconductor device and said second view is a top view of said semiconductor device.

7. An Optical Inspection device in accordance with any of the previous claims, wherein focus compensation prisms are provided in each of said multiple optical paths except for one of said multiple optical paths.

8. A method of operating an Optical Inspection device in accordance with any of the previous claims, wherein said method comprises the steps of:

   - providing said focus compensation prism in said first of said multiple optical paths for compensating for different lengths of said multiple optical paths.

9. A method in accordance with claim 8, wherein said focus compensation prism comprises said mirror.

10. A method in accordance with any of the claims 8-9, wherein said mirror is coated on said focus compensation prism.

11. A method in accordance with any of the claims 8 - 10, wherein said step of providing comprises:

    - providing said focus compensation prism in said first of said multiple optical paths in such a way that said first of said multiple optical paths falls perpendicular to a side of said focus compensation prism.

12. A method in accordance with any of the claims 8 - 10, wherein said step of providing comprises:

    - providing said focus compensation prism in said first of said multiple optical paths in such a way that said first of said multiple optical paths falls on a slanted side of said focus compensation prism.

13. A method in accordance with any of the claims 8 - 12, wherein said camera and lens are oriented in such a way that said first view is a side view of said semiconductor device and said second view is a top view of said semiconductor device.

14. A method in accordance with any of the claims 8 - 13, wherein said step of providing further comprises:

    - providing focus compensation prisms in each of said multiple optical paths except for one of said multiple optical paths.

15. An Optical Inspection system comprising an Optical Inspection device in accordance with any of the claims 1 - 7 as well as said semiconductor device.

fig. 1

fig. 2

fig. 3

Light from source

reflected light

fig. 4

fig. 5

## EUROPEAN SEARCH REPORT

Application Number

EP 24 16 7183

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/185181 A1 (SALVI ALDO [CH]) 25 August 2005 (2005-08-25)<br><br>* paragraphs [0003], [0027]; figures 4,6 * | 1-4, 6-11, 13-15 | INV.<br>G01N21/88<br>G01N21/95 |
| X | WO 2017/034184 A1 (JT CORP [KR]) 2 March 2017 (2017-03-02)<br><br>* paragraphs [0002], [0056] - [0064]; figures 1,2(a),2(b) * | 1,4,6,7, 10,11, 13-15 | |
| X | US 2008/246958 A1 (AMANULLAH AJHARALI [SG] ET AL) 9 October 2008 (2008-10-09) | 1-4, 6-11,13, 15 | |
| Y | * column 1, lines 29-32; figure 2(a) *<br>* column 2, lines 58-65 * | 5,12 | |
| X | US 6 307 210 B1 (SUZUKI YASUYOSHI [JP] ET AL) 23 October 2001 (2001-10-23)<br><br>* paragraphs [0002], [0056] - [0064] * | 1,4,6,7, 10,11, 13-15 | |
| | | | **TECHNICAL FIELDS SEARCHED (IPC)** |
| X | CN 203 587 517 U (UTECHZONE CO LTD) 7 May 2014 (2014-05-07)<br><br>* claim 1; figure 2 * | 1,4,6,7, 10,11, 13,14 | G01N |
| A | WO 2023/197632 A1 (UNIV QUANZHOU NORMAL [CN]) 19 October 2023 (2023-10-19) * paragraph [0051]; figure 6 * | 1-15 | |
| Y | WO 2005/103656 A1 (ADVANCED SYSTEMS AUTOMATION [SG]; KHAW CHIN GUAN [SG] ET AL.) 3 November 2005 (2005-11-03) * figure 1 * | 5,12 | |

The present search report has been drawn up for all claims

| Place of search | Date of completion of the search | Examiner |
|---|---|---|
| Berlin | 6 September 2024 | Roy, Christophe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 7183

This annex lists the patent family members relating to the patent documents cited in the above-mentioned European search report.
The members are as contained in the European Patent Office EDP file on
The European Patent Office is in no way liable for these particulars which are merely given for the purpose of information.

06-09-2024

| Patent document cited in search report | | Publication date | Patent family member(s) | | Publication date |
|---|---|---|---|---|---|
| US 2005185181 | A1 | 25-08-2005 | AT | E432483 T1 | 15-06-2009 |
| | | | CN | 1723407 A | 18-01-2006 |
| | | | EP | 1602001 A1 | 07-12-2005 |
| | | | HK | 1083539 A1 | 07-07-2006 |
| | | | KR | 20050113602 A | 02-12-2005 |
| | | | MY | 135896 A | 31-07-2008 |
| | | | US | 2005185181 A1 | 25-08-2005 |
| | | | WO | 2004079427 A1 | 16-09-2004 |
| WO 2017034184 | A1 | 02-03-2017 | CN | 108449975 A | 24-08-2018 |
| | | | KR | 20170024808 A | 08-03-2017 |
| | | | SG | 11201801479Y A | 28-03-2018 |
| | | | TW | 201713939 A | 16-04-2017 |
| | | | WO | 2017034184 A1 | 02-03-2017 |
| US 2008246958 | A1 | 09-10-2008 | CN | 101290211 A | 22-10-2008 |
| | | | CN | 102788554 A | 21-11-2012 |
| | | | EP | 1978353 A2 | 08-10-2008 |
| | | | KR | 20080091048 A | 09-10-2008 |
| | | | MY | 173646 A | 13-02-2020 |
| | | | SG | 146603 A1 | 30-10-2008 |
| | | | TW | 200907331 A | 16-02-2009 |
| | | | US | 2008246958 A1 | 09-10-2008 |
| US 6307210 | B1 | 23-10-2001 | JP | 3995030 B2 | 24-10-2007 |
| | | | JP | H10148517 A | 02-06-1998 |
| | | | US | 6307210 B1 | 23-10-2001 |
| | | | WO | 9812502 A1 | 26-03-1998 |
| CN 203587517 | U | 07-05-2014 | CN | 203587517 U | 07-05-2014 |
| | | | TW | M477571 U | 01-05-2014 |
| WO 2023197632 | A1 | 19-10-2023 | CN | 114951037 A | 30-08-2022 |
| | | | WO | 2023197632 A1 | 19-10-2023 |
| WO 2005103656 | A1 | 03-11-2005 | TW | 200535399 A | 01-11-2005 |
| | | | WO | 2005103656 A1 | 03-11-2005 |

EPO FORM P0459

For more details about this annex : see Official Journal of the European Patent Office, No. 12/82